# EUROPÄISCHE PATENTSCHRIFT

(11) **EP 0 687 396 B1**
(45) Veröffentlichungstag und Bekanntmachung des Hinweises auf die Patenterteilung: **14.05.1997**
(21) Anmeldenummer: 94908282.0
(22) Anmeldetag: 28.02.1994
(51) Int. Cl.: H02P 9/30, H02K 19/28

(54) **BÜRSTENLOSE SYNCHRONMASCHINE**
BRUSHLESS SYNCHRONOUS MACHINE
MACHINE SYNCHRONE SANS BALAIS

(30) Priorität: 02.03.1993 DE 4307268
(43) Veröffentlichungstag der Anmeldung: 20.12.1995
(73) Patentinhaber: SIEMENS AKTIENGESELLSCHAFT, 80333 München (DE)
(72) Erfinder: AUINGER, Herbert, D-90473 Nürnberg (DE); BREDTHAUER, Jürgen, D-13465 Berlin (DE); WACHTA, Bernhard, D-13467 Berlin (DE)
(86) Internationale Anmeldenummer: DE9400231
(87) Internationale Veröffentlichungsnummer: WO9421031

(56) Entgegenhaltungen:
- DE-A- 1 563 390
- FR-A- 2 349 992
- GB-A- 2 011 186
- US-A- 3 479 543
- US-A- 3 676 764

## Beschreibung

Die Erfindung bezieht sich auf eine bürstenlose Synchronmaschine mit einer Erregermaschine, deren Felderregerwicklung über einen an eine gesonderte, mehrstrangig ausgebildete Hilfswicklung im Stator der Hauptmaschine angeschlossenen Regler gespeist ist.

Eine als Generator eingesetzte derartige Synchronmaschine ist beispielsweise aus der DE-OS 27 14 188 bekannt.

Bei einem derartigen Synchrongenerator ergibt sich das Problem, die Felderregerwicklung der Erregermaschine in allen Betriebszuständen hinreichend mit Energie zu versorgen. Dies kann beispielsweise dadurch geschehen, daß eine Hilfserregermaschine mit einem Dauermagnetpolrad zur Versorgung der Erregermaschine vorgesehen ist. Um den Aufwand für die Versorgung der Erregermaschine zu reduzieren, ist außerdem die Möglichkeit bekannt, die Felderregerwicklung der Erregermaschine aus der Hauptmaschine zu speisen. Zu diesem Zweck werden beispielsweise Spannungen aus der Wicklung der Hauptmaschine abgeleitet und zusätzlich Stromtransformatoren angeschlossen, die mit dem Belastungsstrom der Hauptmaschine gespeist sind. Durch eine solche Schaltungsanordnung wird die Erregermaschine sowohl im Leerlauf als auch bei normaler Belastung und im Kurzschlußfall mit Energie versorgt.

Aus der DE-OS 27 14 188 ist außerdem die Möglichkeit bekannt, eine zusätzliche Hilfswicklung im Stator der Hauptmaschine anzuordnen und mit der hieraus gewonnenen Energie über einen Regler die Erregermaschine zu versorgen. Hierbei tritt aber insbesondere im Kurzschlußfall ein Problem auf, wenn die Klemmenspannung des Generators und die Grundwelle des Feldes im Luftspalt annähernd verschwindet. In diesem Fall ist das den Luftspalt der Hauptmaschine durchsetzende Restmagnetfeld im wesentlichen aus ungeradzahligen Oberwellenanteilen gebildet, von denen beispielsweise der Anteil der dritten Oberwelle bei der üblichen Ausbildung der Pole gewöhnlich besonders groß ist.

Durch eine Hilfswicklung lassen sich je nach deren Gestaltung allerdings nicht alle Oberwellen zur Speisung der Erregerwicklung effektiv ausnutzen. Beispielsweise kann die relative Phasenlage der in den einzelnen Strängen induzierten Wechselspannungen für bestimmte Oberwellen so ungünstig sein, daß die verkettete Spannung insgesamt zu gering für die Speisung der Erregermaschine ist.

Aus der US 3,479,543 ist eine elektrische Maschine mit einer Hilfswicklung für die Erregung bekannt, deren Gestaltung auf die effektive Ausnutzung des magnetischen Querfeldes der Maschine abzielt.

Aus der GB 2,011,186 ist eine mehrsträngig ausgebildete, einphasig betriebene Hilfswicklung bekannt, mit der eine dritte Oberwelle ausgenutzt werden soll. Durch den einsträngigen Betrieb ergibt sich jedoch eine so starke Welligkeit der Versorgungsspannung, daß die Effektivität der Ausnutzung dieser Spannung sehr gering ist.

Der Erfindung liegt daher die Aufgabe zugrunde, eine einfache Hilfswicklung zu schaffen, mit der ein möglichst großer Anteil der energiereichen Oberwellen niedriger Ordnung, insbesondere die dritte Oberwelle effektiv zur Erzeugung einer Versorgungsspannung für die Erregermaschine ausgenutzt wird.

Die Aufgabe wird erfindungsgemäß dadurch gelöst, daß die Hilfswicklung mehrphasig betrieben wird und eine von der Ordnungszahl der im Kurzschlußfall am stärksten ausgeprägten Oberwelle des Feldes der Hauptmaschine verschiedene Strangzahl aufweist.

Es wird bei einer konventionellen Ausbildung der Pole eines 3-phasigen Synchrongenerators von einigen MVA Leistung in einer vier- oder fünfsträngigen, jedoch nur aus einer oder zwei Windungen bestehenden Hilfswicklung durch die normalerweise stark ausgeprägte dritte Oberwelle in jedem Strang eine Wechselspannung induziert, deren verkettete Spannung ausreicht, um die Erregermaschine auch im Kurzschlußfall ausreichend zu versorgen. Es ergibt sich somit durch die erfindungsgemäße Konstruktion ein Minimum an Aufwand für die Hilfswicklung als Mittel zur Energieversorgung des Erregersystems.

Eine vorteilhafte Ausgestaltung der Erfindung sieht daher vor, daß die Hilfswicklung vier- oder fünfsträngig, insbesondere fünfsträngig ausgebildet ist.

Durch eine fünfsträngige Wicklung wird die dritte Oberwelle besonders wirksam ausgenutzt.

Auch eine größere Strangzahl der Hilfswicklung, beispielsweise sieben oder acht, kann vorteilhaft sein.

Eine weitere vorteilhafte Ausgestaltung der Erfindung sieht vor, daß die Stränge der Hilfswicklung in Sternschaltung verbunden sind.

Hierdurch werden von vornherein die Probleme vermieden, die bei Polygon-Schaltung durch in den Strängen umlaufende Ausgleichsströme bei ungünstiger Phasenlage der induzierten Spannungen auftreten können.

Die Erfindung kann auch dadurch vorteilhaft ausgestaltet werden, daß die Stränge der Hilfswicklung in Polygon-Schaltung verbunden sind und daß durch die räumliche Verteilung der Hilfswicklung und/oder die Formung der Läuferpole die Oberwelle, deren Ordnungszahl der Strangzahl der Hilfswicklung entspricht, unterdrückt ist.
Sind die einzelnen Stränge einer n-strangigen Hilfswicklung in einer ein- oder mehrgängigen Polygon-Schaltung geschaltet, so ist bei der Konstruktion des Generators, insbesondere bei der Auslegung der Hilfswicklung und/oder der Polform, darauf zu achten, daß die n-te Oberwelle einen möglichst geringen Anteil liefert. Ansonsten würde diese Oberwelle bei einer n-strangigen Hilfswicklung in Polygon-Schaltung wegen der Phasengleichheit der in den Strängen erzeugten Wechselspannungen durch Ausgleichsströme unerwünschte zusätzliche Verluste innerhalb der Hilfswicklung erzeugen.

Die Erfindung kann außerdem dadurch ausgestaltet sein, daß die Stränge der Hilfswicklung jeweils Windungen mit unterschiedlichen Spulenweiten aufweisen.

Hierdurch kann einerseits im Normalbetrieb die Grundwelle, andererseits im Kurzschlußfall die ausgewählte Oberwelle optimal zur Energieversorgung des Erregerkreises ausgenutzt werden.

Eine weitere Ausgestaltung der Erfindung sieht vor, daß die Stränge der Hilfswicklung halbzahlige Windungszahlen aufweisen.

In diesem Fall sind die Anschlußenden der einzelnen Stränge auf verschiedenen Stirnseiten der Maschine angeordnet.

Durch diese Konstruktion ist die Erzeugung einer Spannung möglich, die zwischen den durch ganzzahlige Windungszahlen erzeugbaren Spannungen liegt. Es kann je nach Beschaffenheit des Reglers der Erregermaschine und den Randbedingungen der Maschine, notwendig sein, solche Zwischenwerte der Spannung dem Regler zuzuleiten.

Eine weitere vorteilhafte Ausgestaltung der Erfindung sieht vor, daß einzelne Windungen der Hilfswicklung sich nicht über die gesamte Länge des Blechpaketes erstrecken, sondern teilweise in Luftschlitzen des Blechpaketes in tangentialer und/oder radialer Richtung verlegt sind.

Auf diese Weise können axial verkürzte Spulen und radial durch Lüftungsschlitze herausgeführte Anschlußenden im Blechpaket realisiert werden.

Es kann außerdem vorteilhaft vorgesehen sein, daß Windungen der Hilfswicklung auf einem Teil ihrer axialen Länge mit einer ersten Spulenweite und auf dem Rest der Länge mit einer zweiten Spulenweite ausgeführt sind.

Auch diese Maßnahmen dienen dazu, entsprechend feinstufig angepaßte Zwischenspannungen zu erzeugen, die zwischen den durch ganzzahlige Windungszahlen erreichbaren Spannungen liegen.

Die Erfindung kann außerdem vorteilhaft dadurch ausgestaltet werden, daß die Hilfswicklung in den Nuten der Hauptwicklung am Nutgrund angeordnet ist.

Hierdurch läßt sich die Hilfswicklung vor Einbringen der Hauptwicklung innerhalb der Nuten leicht und zuverlässig befestigen.

Die Erfindung kann auch dadurch vorteilhaft ausgestaltet werden, daß die Hilfswicklung in den Nuten der Hauptwicklung luftspaltseitig angeordnet ist.
Eine solche Hilfswicklung ist insbesondere bei fertiggestellten Maschinen relativ einfach nachrüstbar.

Außerdem kann die Erfindung vorteilhaft dadurch ausgestaltet werden, daß jeweils die eine Spulenseite der Hilfswicklung jochseitig und die andere Spulenseite luftspaltseitig angeordnet ist.

Eine solche Gestaltung der Hilfswicklung ist insbesondere dann günstig, wenn die Spulenweite der Hilfswicklung im Vergleich zur Polteilung klein ist.

Hierdurch können die Nutzstreufelder der Hauptgeneratorwicklung als stromabhängige Komponente ausgenutzt werden. Dies ist hauptsächlich im Kurzschlußfall von Vorteil, da in diesem Fall die Streufeldstärken besonders groß sind.

Eine weitere Möglichkeit zur Anordnung der Hilfswicklung besteht darin, das Ständerjoch wenigstens teilweise umschließende Schleifen vorzusehen. Anstelle des Luftspaltflusses wird dann der Jochfluß erfaßt.

Bei den vorgenannten Möglichkeiten, bei denen Teile der Windungen am Nutgrund liegen, ist, auf die relative Phasenlage zwischen den vom Nutstreufeld und dem vom Luftspaltfeld induzierten Spannungskomponenten zu achten.

Es kann außerdem vorteilhaft vorgesehen sein, daß sich die Hilfswicklung in den Wickelkopfraum erstreckt, um insbesondere im Kurzschlußfall Stirnstreufelder auszunutzen.

Die einzelnen Stränge der Hilfswicklung können vorteilhaft auch unsymmetrisch am Umfang des Stators verteilt sein.

Durch eine solche, gegebenenfalls auch nicht phasenreine Anordnung, kann im Einzelfall beispielsweise die Hilfswicklung einer für ihre Strangzahl unpassenden Nutzahl der Hauptmaschine angepaßt werden und/oder es kann erreicht werden, daß bestimmte Oberwellen besonders effektiv ausgenutzt werden.

Im folgenden wird die Erfindung anhand einer Zeichnung gezeigt und anschließend erläutert.

Dabei zeigt
Figur 1A schematisch die Anordnung einer fünfsträngigen Hilfswicklung,
Figur 1B die Schaltung der Hilfswicklung zur Spannungsversorgung der Erregermaschine,
Figur 1C schematisch die Anordnung einer fünfsträngigen Hilfswicklung mit Windungen, die unterschiedliche Spulenweiten aufweisen,
Figur 2 eine dreisträngige Hilfswicklung mit einer schematischen Darstellung der Grundwelle (Figur 2A) sowie einer schematischen Darstellung der dritten Oberwelle (Figur 2B),
Figur 3 eine viersträngige Hilfswicklung,
Figur 4 eine unsymmetrisch verteilte fünfsträngige Hilfswicklung,
Figur 5 eine schematische Darstellung des Zusammenwirkens von Haupt- und Erregermaschine,
Figur 6 die Anordnung einer Windung der Hilfswicklung in einer Statornut.

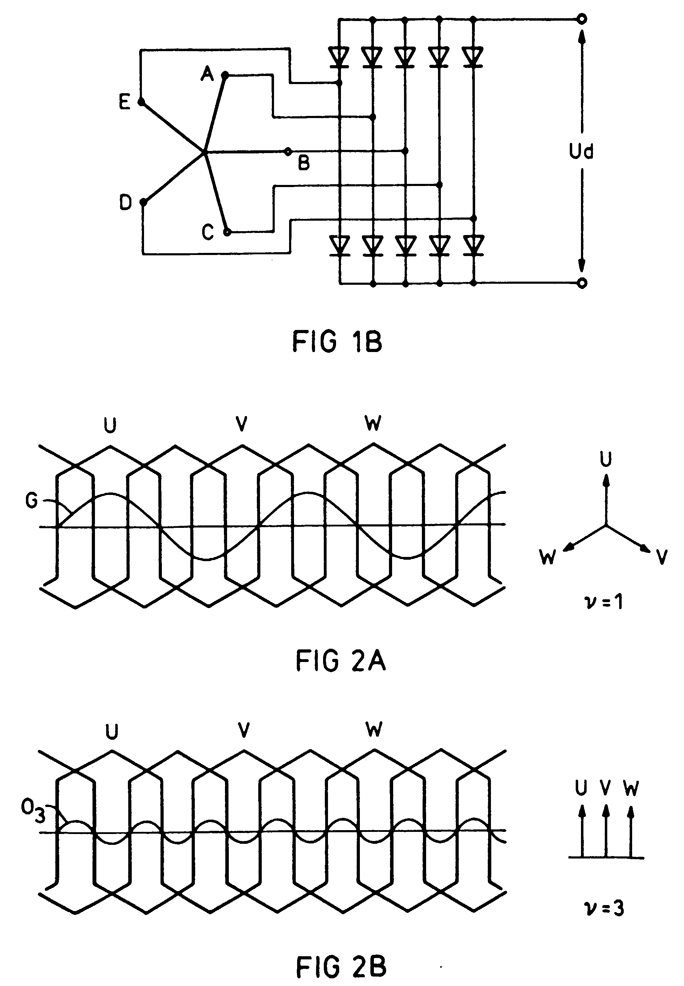

Anhand von Figur 2 sei dargestellt, warum beispielsweise bei einer dreiphasigen Generator/-oder Motorwicklung mit drei Strängen durch eine dreisträngige Hilfswicklung, die dritte Oberwelle nicht zur Speisung der Erregermaschine ausgenutzt werden kann.

Mit U, V und W sind die Wicklungen der drei Stränge der Hilfswicklung bezeichnet.

In Figur 2A ist das idealisiert sinusförmige Grundfeld G eingezeichnet. Es ergeben sich für die drei Stränge in bekannter Weise drei um jeweils 120° gegeneinander phasenverschobene Wechselspannungen (rechter Teil der Fig. 2A).

In Figur 2B ist außer den Strängen der Hilfswicklung nur die dritte Oberwelle des Maschinenfeldes dargestellt. Es zeigt sich, daß in jedem der Wicklungsstränge der Hilfswicklung durch die dritte Oberwelle 03 eine Wechselspannung induziert wird, wobei die drei induzierten Spannungen phasengleich sind (rechter Teil der Fig. 2B).

Das bedeutet, daß die verkettete Spannung zwischen den drei Wicklungssträngen gleich null ist. Durch eine derartige dreisträngige Hilfswicklung kann also die dritte Oberwelle des Grundfeldes nicht zur Speisung der Erregermaschine ausgenutzt werden.

In den im folgenden beschriebenen Figuren bezeichnen die Zahlen jeweils die einzelnen Nuten, in die die Windungen der Hilfswicklung eingelegt sind. Die Buchstaben bezeichnen die einzelnen Wicklungsstränge.

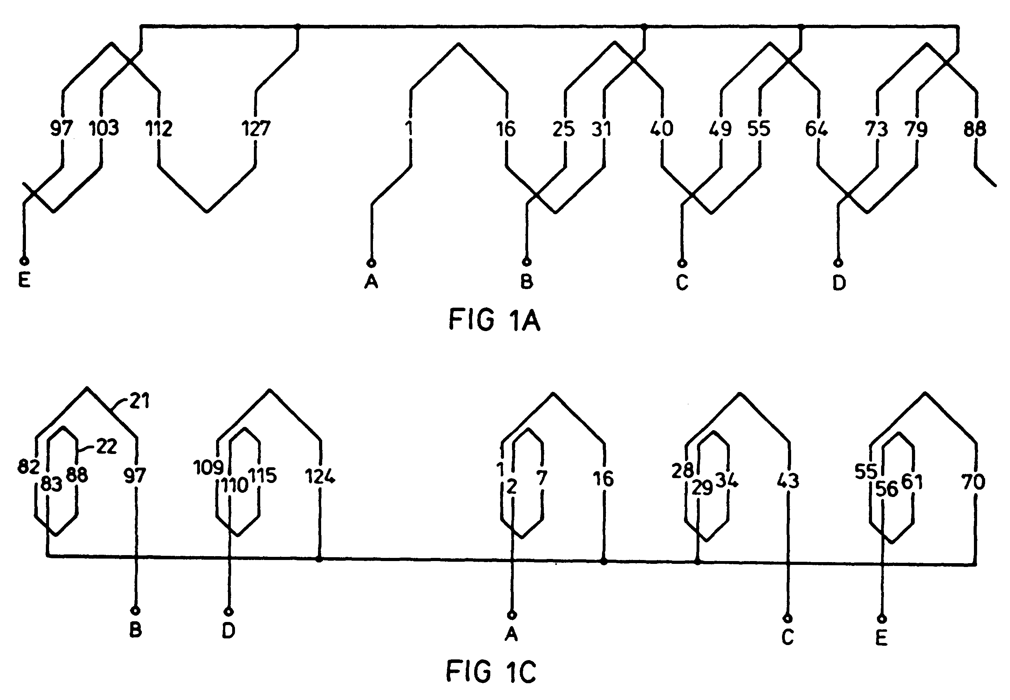

In Figur 1A ist eine fünfsträngige Hilfswicklung für einen 10-poligen Generator mit 150 Statornuten dargestellt. Die Zahl der Windungen pro Strang beträgt jeweils 1,5, so daß die beiden Anschlüsse jedes Stranges jeweils an unterschiedlichen Enden der Maschine angeordnet sind. Da die Spulenweite der Polteilung entspricht, ist sowohl für die Grundwelle als auch für die dritte Oberwelle die volle Strangwindungszahl effektiv wirksam.

In Figur 1C ist eine Hilfswicklung dargestellt, bei der jeder Strang aus zwei Windungen mit unterschiedlichen Spulenweiten besteht. Auf diese Weise wird gegenüber dem Beispiel aus Fig. 1A bei nahezu unveränderter effektiver Windungszahl für die Grundwelle jeweils eine deutlich vergrößerte effektive Windungszahl für die dritte Oberwelle erreicht. Die Phasenlage der Stränge der Hilfswicklung ist in den Fällen der Figuren 1A und 1C jeweils sowohl für die Grundwelle, als auch die dritte Oberwelle gleich und zwar wie in Figur 1B dargestellt.

In Figur 1B ist in schematischer Weise die Verbindung der fünf Stränge mit einer Gleichrichterschaltung dargestellt. Diese Schaltung liefert als verkettete Spannung aus den fünf Strängen eine relativ gleichmäßige 10-pulsige Gleichspannung Ud, die als Speisespannung über einen Regler der Erregermaschine zugeführt wird. Die Hilfswicklung liefert sowohl im Normalbetrieb durch die Grundwelle, als auch im Kurzschlußfall durch die dritte Oberwelle die notwendige Mindestspannung. Beim Start des Generators wird die Anfangserregung der Hauptmaschine durch magnetische Remanenz sowohl in der Hauptmaschine als auch in der Erregermaschine erzeugt.

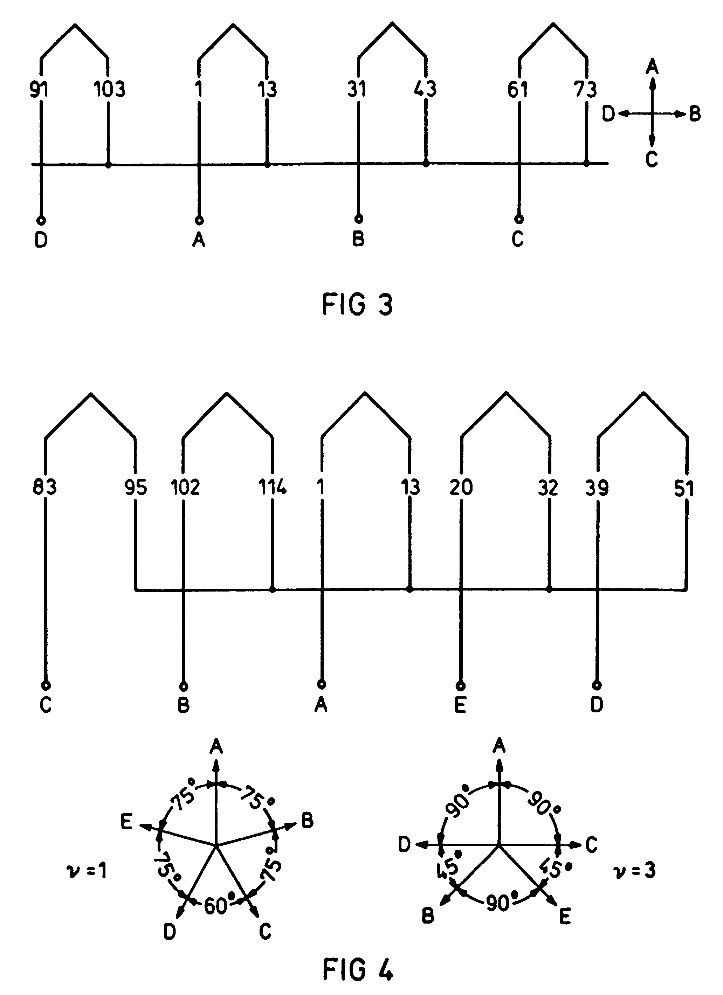

Figur 3 zeigt eine viersträngige Hilfswicklung, bei einer 10-poligen Maschine mit 120 Statornuten, wobei die vier Stränge in ähnlicher Weise geschaltet sein können, wie in Figur 1b für eine fünfsträngige Hilfswicklung gezeigt. Die viersträngige Hilfswicklung liefert im allgemeinen eine stärker wellige (4-pulsige) Speisespannung Ud als eine Hilfswicklung mit mehr als vier Strängen, da die relative Phasenlage von jeweils zwei Strängen gleich ist (vgl. rechter Teil der Fig. 3). Es kann aber beispielsweise wegen der zur Verfügung stehenden Zahl der Nuten aus Symmetriegründen günstiger sein, eine viersträngige Hilfswicklung zu verwenden, als eine Hilfswicklung mit mehr als vier Strängen. Hier entspricht ebenfalls die Spulenweite der Polteilung und die effektive Windungszahl beträgt 1.

Figur 4 zeigt bei einer 10-poligen Maschine mit 120 Statornuten, wie sie auch Fig. 3 zugrundeliegt, eine unsymmetrische fünfsträngige Hilfswicklung als vorteilhafte Alternativlösung. Die unsymmetrische Verteilung der fünf Stränge ist einerseits deshalb notwendig, weil die fünfsträngige Hilfswicklung in 120 Nuten nicht symmetrisch unterbringbar ist. Andererseits werden durch die gegenüber einer symmetrischen Anordnung unterschiedliche Phasenlage der einzelnen Strangspannungen die Grundwelle und die dritte Oberwelle effektiver ausgenutzt, als bei einer symmetrisch angeordneten Hilfswicklung gem. Fig. 3.

Die Phasendiagramme in der Fig. 4 zeigen, daß die relative Phasenlage der Strangspannungen zueinander sowohl im Falle der Grundwelle (ν=1), als auch bei der dritten Oberwelle (ν=3) günstiger zur Erzielung einer wenig welligen Gleichspannung ist.

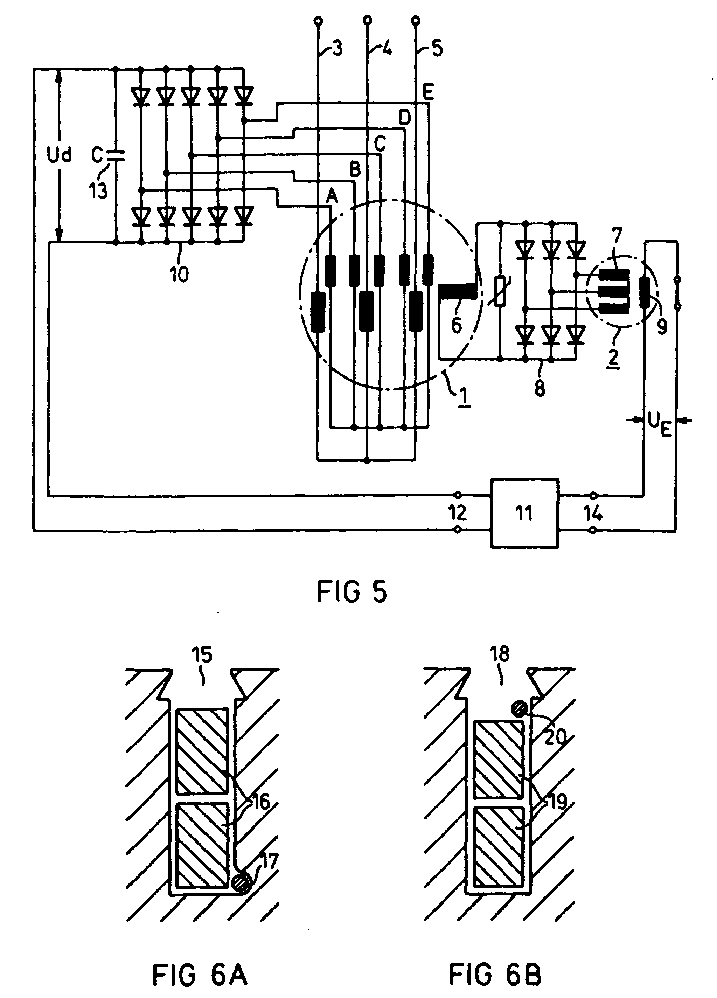

Figur 5 zeigt, schematisch die Hauptmaschine 1 und die Erregermaschine 2. Die Hauptmaschine 1 weist in ihrem Stator drei Stränge 3, 4, 5 einer Hauptwicklung sowie 5 Stränge A, B, C, D, E der Hilfswicklung auf. Die Rotorwicklung 6 der Hauptmaschine ist konventionell aufgebaut.

Die Wicklung 6 des Rotors der Hauptmaschine wird aus der dreisträngigen Rotorwicklung 7 der Erregermaschine 2 über eine Gleichrichterschaltung 8 gespeist. Die Statorwicklung 9 der Erregermaschine 2 wird aus den Strängen A, B, C, D, E der 5-phasigen Hilfswicklung der Hauptmaschine 1 über eine zweite Gleichrichterschaltung 10 und einen Spannungsregler 11 gespeist. Ein Kondensator 13 sorgt für die Glättung der aus der Gleichrichterschaltung 10 gelieferten Versorgungsspannung Ud an den Regleranschlußklemmen 12. Die von dem Regler 11 gelieferte Erregerspannung U_{E} ≤ Ud wird an den Klemmen 14 in die Statorwicklung 9 der Erregermaschine 2 eingespeist.

Figur 6A zeigt im Querschnitt eine Nut 15 im Stator der Hauptmaschine, mit den Spulenseiten der zweischichtigen Hauptwicklung 16 und einer am Nutgrund untergebrachten Windung 17 der Hilfswicklung.

Figur 6B zeigt im Querschnitt eine Nut 18 im Stator der Hauptmaschine mit einer Hauptwicklung 19 und einer luftspaltseitig untergebrachten Windung 20 der Hilfswicklung.

## Patentansprüche

1. Bürstenlose dreiphasige Synchronmaschine mit einer Erregermaschine (2), deren Felderregerwicklung (3) über einen an eine gesonderte, mehrsträngig ausgebildete Hilfswicklung (A, B, C, D, E) im Stator der Hauptmaschine angeschlossenen Regler (11) gespeist ist,
**dadurch gekennzeichnet**, daß
die Hilfswicklung (A, B, C, D, E) mehrphasig betrieben wird und eine von der Ordnungszahl der im Kurzschlußfall am stärksten ausgeprägten Oberwelle des Feldes der Hauptmaschine verschiedene Strangzahl aufweist.

2. Bürstenlose Synchronmaschine nach Anspruch 1,
**dadurch gekennzeichnet**, daß
die Hilfswicklung (A, B, C, D, E) vier- oder fünfsträngig, insbesondere fünfsträngig ausgebildet ist.

3. Bürstenlose Synchronmaschine nach Anspruch 1 oder 2,
**dadurch gekennzeichnet**, daß
die Stränge der Hilfswicklung (A, B, C, D, E) in Sternschaltung verbunden sind.

4. Bürstenlose Synchronmaschine nach Anspruch 1 oder 2,
**dadurch gekennzeichnet**, daß
die Stränge der Hilfswicklung in Polygon-Schaltung verbunden sind und daß durch die räumliche Verteilung der Hilfswicklung und/oder die Formung der Läuferpole die Oberwelle, deren Ordnungszahl der Strangzahl der Hilfswicklung (A, B, C, D, E) entspricht, unterdrückt ist.

5. Bürstenlose Synchronmaschine nach Anspruch 1 oder einem der folgenden,
**dadurch gekennzeichnet**, daß
die Stränge der Hilfswicklung (A, B, C, D, E) jeweils Windungen (21, 22) mit unterschiedlichen Spulenweiten aufweisen.

6. Bürstenlose Synchronmaschine nach Anspruch 1 oder einem der folgenden,
**dadurch gekennzeichnet**, daß
die Stränge der Hilfswicklung (A, B, C, D, E) halbzahlige Windungszahlen aufweisen.

7. Bürstenlose Synchronmaschine nach Anspruch 1 oder einem der folgenden,
**dadurch gekennzeichnet**, daß
einzelne Windungen der Hilfswicklung (A, B, C, D, E) sich nicht über die gesamte Länge des Blechpaketes erstrecken, sondern teilweise in Luftschlitzen des Blechpaketes in tangentialer und/oder radialer Richtung verlegt sind.

8. Bürstenlose Synchronmaschine nach Anspruch 1 oder einem der folgenden,
**dadurch gekennzeichnet**, daß
die Hilfswicklung (A, B, C, D, E) in den Nuten (16) der Hauptwicklung am Nutgrund angeordnet ist.

9. Bürstenlose Synchronmaschine nach einem der Ansprüche 1 bis 7,
**dadurch gekennzeichnet**, daß
die Hilfswicklung (A, B, C, D, E) in den Nuten (19) der Hauptwicklung luftspaltseitig angeordnet ist.

10. Bürstenlose Synchronmaschine nach Anspruch 1 oder einem der folgenden,
**dadurch gekennzeichnet**, daß
jeweils die eine Spulenseite der Hilfswicklung (A, B, C, D, E) jochseitig und die andere Spulenseite luftspaltseitig angeordnet ist.

11. Bürstenlose Synchronmaschine nach Anspruch 1 oder einem der folgenden,
**dadurch gekennzeichnet**, daß
die Hilfswicklung (A, B, C, D, E) sich in den Wickelkopfraum erstreckt, um insbesondere im Kurzschlußfall Stirnstreufelder auszunutzen.

12. Bürstenlose Synchronmaschine nach Anspruch 1 oder einem der folgenden,
**dadurch gekennzeichnet**, daß
die einzelnen Stränge der Hilfswicklung (A, B, C, D, E) unsymmetrisch am Umfang des Stators verteilt sind.

## Claims

1. Brushless three-phase synchronous machine having an exciter (2) whose field exciting winding (3) is fed by way of a controller (11) attached to a separate auxiliary winding (A, B, C, D, E) having a multi-phase construction in the stator of the primary machine, **characterised in that** the auxiliary winding (A, B, C, D, E) is operated in a multi-phase manner and has a number of phases that differs from the ordinal number of the most distinctive harmonic of the field of the primary machine in the case of a short circuit.

2. Brushless synchronous machine according to claim 1, **characterised in that** the auxiliary winding (A, B, C, D, E) has a four-phase or a five-phase construction, in particular a five-phase construction.

3. Brushless synchronous machine according to claims 1 or 2, **characterised in that** the phases of the auxiliary winding (A, B, C, D, E) are joined in a star connection.

4. Brushless synchronous machine according to claim 1 or 2, **characterised in that** the phases of the auxiliary winding are joined in a polygon connection and in that, owing to the spatial distribution of the auxiliary winding and/or the formation of the rotor poles, the harmonic whose ordinal number corresponds to the number of phases of the auxiliary winding (A, B, C, D, E), is suppressed.

5. Brushless synchronous machine according to claim 1 or one of the subsequent claims, **characterised in that** the phases of the auxiliary winding (A, B, C, D, E) each have turns (21, 22) with different coil widths.

6. Brushless synchronous machine according to claim 1 or one of the subsequent claims, **characterised in that** the phases of the auxiliary winding (A, B, C, D, E) have half-integral numbers of turns.

7. Brushless synchronous machine according to claim 1 or one of the subsequent claims, **characterised in that** individual turns of the auxiliary winding (A, B, C, D, E) do not extend over the entire length of the laminated core but are partially shifted in the tangential and/or radial direction in air ducts of the laminated core.

8. Brushless synchronous machine according to claim 1 or one of the subsequent claims, **characterised in that** the auxiliary winding (A, B, C, D, E) is arranged on the slot base in the slots (16) of the primary winding.

9. Brushless synchronous machine according to one of claims 1 to 7, **characterised in that** the auxiliary winding (A, B, C, D, E) is arranged on the air gap side in the slots (19) of the primary winding.

10. Brushless synchronous machine according to claim 1 or one of the subsequent claims, **characterised in that**, in each case, one coil side of the auxiliary winding (A, B, C, D, E) is arranged on the yoke side and the other coil side is arranged on the air gap side.

11. Brushless synchronous machine according to claim 1 or one of the subsequent claims, **characterised in that** the auxiliary winding (A, B, C, D, E) extends into the overhang space in order to utilize front leakage fields in the case of a short circuit in particular.

12. Brushless synchronous machine according to claim 1 or one of the subsequent claims, **characterised in that** the individual phases of the auxiliary winding (A, B, C, D, E) have an asymmetrical distribution on the periphery of the stator.

## Revendications

1. Machine synchrone, triphasée, sans balai, comportant une excitatrice (2) dont l'enroulement (3) d'excitation de champ est alimenté par l'intermédiaire d'un régulateur (11) raccordé à un enroulement (A, B, C, D, E) auxiliaire séparé, à plusieurs branches, se trouvant dans le stator de la machine principale, caractérisée en ce que l'on fait fonctionner l'enroulement (A, B, C, D, E) auxiliaire de manière polyphasée et en ce que cet enroulement a un nombre de branches différent du nombre ordinal de l'harmonique du champ de la machine principale qui est la plus prononcée en cas de court-circuit.

2. Machine synchrone sans balais suivant la revendication 1, caractérisée en ce que l'enroulement (A, B, C, D, E) auxiliaire est à quatre ou à cinq branches, notamment à cinq branches.

3. Machine synchrone sans balais suivant la revendication 1 ou 2, caractérisée en ce que les branches de l'enroulement (A, B, C, D, E) auxiliaire sont reliées en un montage en étoile.

4. Machine synchrone sans balais suivant la revendication 1 ou 2, caractérisée en ce que les branches de l'enroulement auxiliaire sont reliées en un montage en polygone et en ce, par la répartition dans l'espace de l'enroulement auxiliaire et/ou par la forme que l'on donne aux pôles rotoriques, l'harmonique dont le nombre ordinal correspond au nombre de branches de l'enroulement (A, B, C, D, E) auxiliaire est supprimée.

5. Machine synchrone sans balais suivant la revendication 1 ou l'une des suivantes, caractérisée en ce que les branches de l'enroulement (A, B, C, D, E) auxiliaire comportent des spires ayant chacune des largeurs de bobine différentes.

6. Machine synchrone sans balais suivant la revendication 1 ou l'une des suivantes, caractérisée en ce que les branches de l'enroulement (A, B, C, D, E) auxiliaire ont des nombres de spires qui sont la moitié d'un entier.

7. Machine synchrone sans balais suivant la revendication 1 ou l'une des suivantes, caractérisée en ce que des spires individuelles de l'enroulement (A, B, C, D, E) auxiliaire ne s'étendent pas sur toute la longueur du paquet de tôles, mais sont décalées partiellement dans des entrefers du paquet de tôles dans la direction tangentielle et/ou dans la direction radiale.

8. Machine synchrone sans balais suivant la revendication 1 ou l'une des suivantes, caractérisée en ce que l'enroulement (A, B, C, D, E) auxiliaire est monté dans les encoches (16) de l'enroulement principal, au fond des encoches.

9. Machine synchrone sans balais suivant l'une des revendications 1 à 9, caractérisée en ce que l'enroulement (A, B, C, D, E) auxiliaire est monté dans les encoches (19) de l'enroulement principal, du côté de l'entrefer.

10. Machine synchrone sans balais suivant la revendication 1 ou l'une des suivantes, caractérisée en ce que l'un des côtés de bobine de l'enroulement (A, B, C, D, E) auxiliaire est monté du côté de la culasse et l'autre côté de bobine du côté de l'entrefer.

11. Machine synchrone sans balais suivant la revendication 1 ou l'une des suivantes, caractérisée en ce que l'enroulement (A, B, C, D, E) auxiliaire s'étend dans la zone de la tête de bobine afin de tirer parti des champs de fuite frontaux, notamment en cas de court-circuit.

12. Machine synchrone sans balais suivant la revendication 1 ou l'une des suivantes, caractérisée en ce que les branches individuelles de l'enroulement (A, B, C, D, E) auxiliaire sont réparties de manière dissymétrique sur le pourtour du stator.
